# FASCICULE DE BREVET EUROPEEN

(11) **EP 3 111 271 B1**
(45) Date de publication et mention de la délivrance du brevet: **01.07.2020**
(21) Numéro de dépôt: 15706189.6
(22) Date de dépôt: 13.02.2015
(51) Int. Cl.: G02B 27/01, G06F 3/01

(54) **SYSTÈME COMPORTANT UN CASQUE EQUIPÉ D'UN DISPOSITIF DE VISUALISATION ET DE MOYENS D'AFFICHAGE ET DE GESTION DE DOCUMENTATION**
SYSTEM MIT EINEM HELM MIT EINER ANZEIGE- UND DATENVERWALTUNGSVORRICHTUNG
SYSTEM COMPRISING A HELMET WITH DISPLAY MEANS AND DATA-MANAGEMENT MEANS

(30) Priorité: 28.02.2014 FR 1400506
(43) Date de publication de la demande: 04.01.2017
(73) Titulaire: THALES, 92400 Courbevoie (FR)
(72) Inventeur: SERVANTIE, Xavier, F-33187 Le Haillan (FR); LALUQUE, Laurent, F-33000 Bordeaux (FR); ANDRE, Cécile, F-33187 Le Haillan (FR)
(74) Mandataire: Bréda, Jean-Marc
(86) Numéro de dépôt international: PCT/EP2015/053147
(87) Numéro de publication internationale: WO 2015/128212

(56) Documents cités:
- EP-A2- 1 039 364
- JP-A- 2000 155 855
- JP-A- 2004 015 106
- JP-A- 2004 178 222
- US-A1- 2010 125 816

## Description

Le domaine de l'invention est celui des systèmes de visualisation de casque, utilisés notamment dans le domaine aéronautique.

Les systèmes de visualisation de casque sont couramment utilisés pour des applications aéronautiques depuis plusieurs décennies. Un système de visualisation de casque comporte principalement deux sous-ensembles. Le premier est un casque équipé d'un système de visualisation projetant vers l'œil ou les yeux de l'utilisateur une image collimatée en superposition sur l'extérieur. Le second est un système de détection de posture de casque permettant de repérer dans l'espace, par rapport à un repère connu, généralement lié à un aéronef, la position et l'orientation du casque. La publication JP 2004 015106 A décrit un système comportant un casque équipé d'un dispositif de visualisation particulièrement pertinent.

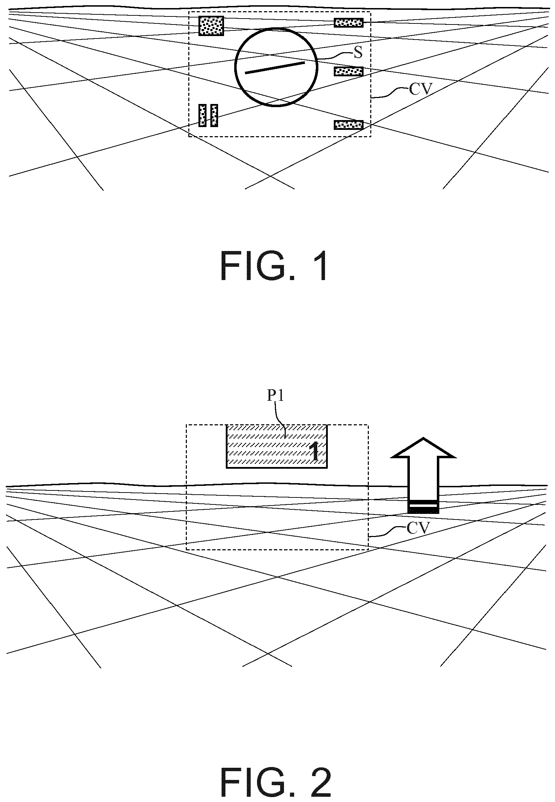

La principale fonction du système de visualisation de casque est de pouvoir présenter, en superposition sur le paysage extérieur, des informations dites « conformes », c'est-à-dire affichées virtuellement dans la direction exacte qu'elles occuperaient dans le paysage extérieur. Ainsi, si le système affiche une image vidéo issue d'un capteur et comportant un certain nombre d'objets, les objets représentés de cette image se superposent exactement aux objets réels présents sur le terrain. A titre d'exemple, la figure 1 représente, de façon simplifiée la symbologie S dans le champ visuel CV d'un visuel de casque. Le paysage extérieur est représenté sur cette figure par des lignes de fuite. Le rectangle en pointillés représente les limites du champ visuel du système de visualisation.

Cependant, le pilote peut être conduit à consulter de la documentation concernant soit son aéronef, soit le vol, soit la mission en cours. Cette documentation existe soit sous forme de documentation papier, soit, depuis quelques années, sous forme électronique. Ce type d'équipement électronique est connu sous le nom d' « EFB », acronyme signifiant « Electronic Flight Bag ». La documentation peut être également affichée sur les écrans de visualisation principaux situés sur la planche de bord du cockpit. Dans tous les cas, l'utilisateur doit nécessairement accommoder pour passer de la vision externe à la lecture de sa documentation quelle soit sous forme papier ou sous forme numérique. D'autre part, les informations fournies par le système de visualisation sont perdues. Enfin, la consultation d'une documentation papier lui impose de lâcher les commandes pendant quelques instants.

L'objet de l'invention est de mettre en œuvre de nouveaux moyens permettant d'afficher et de gérer la documentation aéronautique par le système de visualisation de casque. On simplifie ainsi de façon importante la consultation de cette documentation en vol sans modifier de façon significative le système de visualisation de casque. Plus précisément, l'invention a pour objet un système de visualisation selon l'objet de la revendication indépendante.

Avantageusement, l'apparition et l'affichage desdites données dans le dispositif de visualisation est conditionnée par une orientation du casque dans une plage d'orientation déterminée.

Avantageusement, une fois apparues, la localisation des données affichées dans le dispositif de visualisation est fixe dans le référentiel connu et indépendante des légers changements de posture du casque n'excédant pas quelques degrés.

Avantageusement, une fois apparues, les données étant structurées sous forme de pages, une page entière étant présentée dans le dispositif de visualisation, le changement de pages vers la droite ou vers la gauche s'effectue en modifiant la posture du casque vers la gauche ou vers la droite d'au moins plusieurs degrés.

Avantageusement, l'affichage des données dans le dispositif de visualisation est localisé au centre et dans la partie haute du dispositif de visualisation.

L'invention sera mieux comprise et d'autres avantages apparaîtront à la lecture de la description qui va suivre donnée à titre non limitatif et grâce aux figures annexées parmi lesquelles :
La figure 1 représente une vue d'une symbologie dans un système de visualisation de casque selon l'art antérieur ;
Les figures 2, 3 et 4 représentent la gestion de l'affichage des données de la base documentaire dans un système de visualisation de casque selon l'invention.

Un système de visualisation de casque selon l'invention comporte principalement :
- un casque équipé comprenant un ensemble optoélectronique d'affichage. Cet ensemble peut être monoculaire ou binoculaire. Lorsque le casque est porté par un utilisateur, cet ensemble donne une image collimatée issue d'un afficheur et superposée au paysage extérieur par un combineur ou mélangeur optique qui peut être indépendant ou intégré à la visière ;
- un système de détection de posture du casque permettant de déterminer la position et l'orientation du casque dans le repère de l'aéronef. Il existe différents systèmes de détection qui sont bien connus de l'homme du métier. On citera les systèmes à détection magnétique dans lesquels un récepteur mesure les composantes d'un champ électromagnétique connu et les systèmes à détection optique comportant un émetteur et un récepteur apte à déterminer la position et l'orientation de cet émetteur par reconnaissance de forme. La position de l'aéronef dans un repère terrestre est elle-même connue au moyen de différents capteurs comme la centrale inertielle de l'aéronef ;
- une base documentaire de données concernant soit l'aéronef et ses caractéristiques techniques, soit le plan de vol ou la mission en cours. A titre d'exemple, cette base peut comporter des données cartographiques comportant des informations spécifiques à l'aéronautique comme les aéroports ou les points de passage aéronautiques,...
- un ensemble électronique ou un calculateur électronique assurant plusieurs fonctions détaillées ci-dessous.

La première fonction du calculateur électronique est d'assurer la génération d'une symbologie conforme superposée sur le paysage extérieur par l'ensemble optoélectronique d'affichage. Cette symbologie comporte généralement les informations de base nécessaires au pilotage comme les indications de la vitesse, de l'altitude, de l'assiette, de l'horizon,.... Pour assurer cette fonction, les différents capteurs de l'aéronef fournissent au calculateur les informations nécessaires. Le système de détection d'orientation du casque lui donne les informations de position et d'orientation permettant d'afficher la symbologie de façon conforme, c'est-à-dire dans un repère terrestre indépendant des mouvements de l'aéronef et des mouvements du casque.

La seconde fonction du calculateur et qui est plus particulièrement dédiée à la mise en œuvre de l'invention est la gestion de l'affichage des données de la base documentaire en fonction de la posture du casque.

Toutes ces fonctions électroniques ne posent pas de difficultés particulières pour l'homme du métier.

A titre d'exemple, les figures 2, 3 et 4 illustrent la gestion de l'affichage des données de la base documentaire en fonction de la posture du casque. Sur ces figures, le rectangle en pointillés représente les limites du champ visuel du système de visualisation. Les flèches sont représentatives des changements de posture du casque. Le paysage extérieur est représenté sur ces figures par des lignes de fuite.

La figure 2 illustre l'apparition de la base de données documentaire dans le champ du visuel de casque. Elle ne peut apparaître que si le casque a une orientation bien déterminée. Cette orientation est comprise dans une certaine marge de quelques degrés. Dans le cas de la figure 2, le casque est tourné vers le haut et dans l'axe médian du porteur. En clair, l'utilisateur ne tourne la tête ni vers la gauche, ni vers la droite mais uniquement vers le haut. La page P1 numérotée « 1 » apparaît. Préférentiellement, l'apparition de la documentation se fait de façon progressive. Sur la figure 2, La page P1 numérotée « 1 » est totalement apparente.

Préférentiellement, la documentation est liée au repère de l'aéronef et ne bouge donc pas en cas de légers mouvements de tête n'excédant pas quelques degrés.

Préférentiellement, la documentation est organisée sous forme de feuilles P référencées et/ou numérotées comme on le voit sur les figures 2, 3 et 4. Préférentiellement, une seule feuille est visible dans le champ du visuel de casque. Quand la documentation apparaît ou réapparaît, on peut afficher soit systématiquement la première page, soit la dernière page consultée.

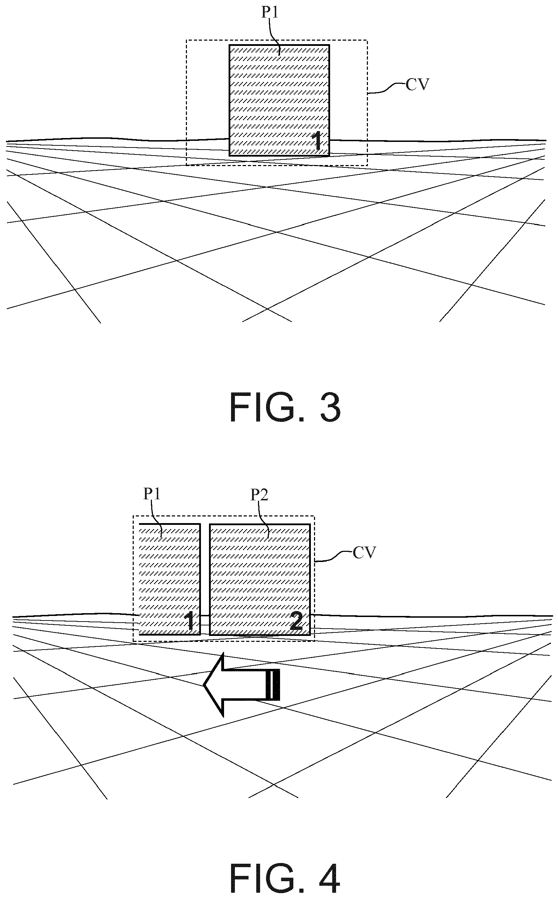

La consultation de la documentation peut se faire de la façon suivante. Le changement de pages vers la droite ou vers la gauche s'effectue en modifiant la posture du casque vers la gauche ou vers la droite d'au moins plusieurs degrés. Ce changement de page est illustré sur la figure 4 où progressivement la page P2 numérotée « 2 » se substitue à la page P1 numérotée « 1 », l'utilisateur ayant tourné la tête vers la gauche. Les pages s'arrêtent de défiler lorsque la tête de l'utilisateur reprend sa position initiale.

## Revendications

1. Système de visualisation de casque comportant au moins un casque équipé d'un dispositif de visualisation et un système de détection de posture dudit casque par rapport à un référentiel connu, le système de visualisation comportant une base de données documentaires et des moyens d'affichage et de gestion desdites données documentaires en fonction de la posture du casque, **caractérisé en ce qu'**une fois apparues, les données étant structurées sous forme de pages (P1, P2), une page entière étant présentée dans le dispositif de visualisation, le changement de pages vers la droite ou vers la gauche s'effectue en modifiant la posture du casque vers la gauche ou vers la droite d'au moins plusieurs degrés.

2. Système de visualisation de casque selon la revendication 1, **caractérisé en ce que** l'apparition et l'affichage desdites données dans le dispositif de visualisation est conditionnée par une orientation du casque dans une plage d'orientation déterminée.

3. Système de visualisation de casque selon la revendication 1, **caractérisé en ce qu'**une fois apparues, la localisation des données affichées dans le dispositif de visualisation est fixe dans le référentiel connu et indépendante des légers changements de posture du casque n'excédant pas quelques degrés.

4. Système de visualisation de casque selon l'une des revendications précédentes, **caractérisé en ce que** l'affichage des données dans le dispositif de visualisation est localisée au centre et dans la partie haute du dispositif de visualisation.

## Patentansprüche

1. Helmanzeigesystem, beinhaltend mindestens einen Helm, ausgerüstet mit einer Anzeigevorrichtung und einem System zur Erkennung der Haltung des Helms in Bezug auf ein bekanntes Bezugssystem, wobei das Anzeigesystem eine Dokumenten-Datenbank und Mittel zur Anzeige und Verwaltung der Dokumentendaten in Abhängigkeit der Stellung des Helms beinhaltet, **dadurch gekennzeichnet, dass** die Daten, sobald sie aufgetaucht sind, wobei sie in Form von Seiten (P1, P2) strukturiert sind und eine vollständige Seite in der Anzeigevorrichtung präsentiert wird, der Seitenwechsel nach rechts oder nach links durch Ändern der Helmhaltung nach links oder nach rechts um mindestens mehrere Grad erfolgt.

2. Helmanzeigesystem nach Anspruch 1, **dadurch gekennzeichnet, dass** Auftauchen und Anzeige der Daten in der Anzeigevorrichtung von einer Ausrichtung des Helms in einem bestimmten Ausrichtungsbereich abhängt.

3. Helmanzeigesystem nach Anspruch 1, **dadurch gekennzeichnet, dass**, sobald die Daten aufgetaucht sind, die Lokalisierung der in der Anzeigevorrichtung angezeigten Daten fix in dem bekannten Bezugssystem und unabhängig von leichten Haltungsänderungen des Helms innerhalb weniger Grade ist.

4. Helmanzeigesystem nach einem der vorhergehenden Ansprüche, **dadurch gekennzeichnet, dass** die Anzeige der Daten in der Anzeigevorrichtung in der Mitte und im oberen Bereich der Anzeigevorrichtung lokalisiert ist.

## Claims

1. A helmet display system comprising at least one helmet equipped with a display device and a system for detecting the posture of said helmet relative to a known reference, the display system comprising a document database and means for displaying and managing said document data as a function of the posture of the helmet, **characterised in that**, once they appear, with the data being structured in the form of pages (P1, P2), a whole page being presented in the display device, the pages are changed to the right or to the left by modifying the posture of the helmet to the left or to the right by at least several degrees.

2. The helmet display system as claimed in claim 1, **characterised in that** the appearance and the display of said data in the display device is determined by an orientation of the helmet in a determined orientation range.

3. The helmet display system as claimed in claim 1, **characterised in that**, once it appears, the location of the data displayed in the display device is fixed in the known reference and is independent of slight changes of posture of the helmet that do not exceed a few degrees.

4. The helmet display system as claimed in any one of the preceding claims, **characterised in that** the display of the data in the display device is located at the centre and in the upper part of the display device.
